# EUROPEAN PATENT SPECIFICATION

(11) **EP 4 359 721 B1**
(45) Date of publication and mention of the grant of the patent: **11.06.2025**
(21) Application number: 22733440.6
(22) Date of filing: 15.06.2022
(51) Int. Cl.: F28F 3/00

(54) **GASKET ARRANGEMENT, HEAT TRANSFER PLATE, KIT, ASSEMBLY, HEAT EXCHANGER AND METHOD**
DICHTUNGSANORDNUNG, WÄRMEÜBERTRAGUNGSPLATTE, BAUSATZ, ANORDNUNG, WÄRMETAUSCHER UND VERFAHREN
AGENCEMENT DE JOINT D'ÉTANCHÉITÉ, PLAQUE DE TRANSFERT DE CHALEUR, KIT, ENSEMBLE, ÉCHANGEUR DE CHALEUR ET PROCÉDÉ

(30) Priority: 24.06.2021 EP 21181394
(43) Date of publication of application: 01.05.2024
(73) Proprietor: Alfa Laval Corporate AB, 221 00 Lund (SE)
(72) Inventor: BLOMGREN, Fredrik, 239 41 Falsterbo (SE)
(74) Representative: Alfa Laval Attorneys
(86) International application number: PCT/EP2022/066405
(87) International publication number: WO 2022/268617

(56) References cited:
- EP-A1- 3 825 637
- GB-A- 1 101 988
- US-A- 5 070 939
- US-B1- 6 935 415

## Description

### TECHNICAL FIELD

The invention relates to a gasket arrangement for sealing between two heat transfer plates of a plate heat exchanger, and a heat transfer plate arranged to cooperate with a gasket arrangement. The invention also relates a heat exchanger comprising such a gasket arrangement and such a heat transfer plate and a method of refurbishing such assembly. More specifically, the present invention relates to a gasket arrangement as defined in the preamble of claim 1, and a heat transfer plate as defined in the preamble of claim 6. Such gasket arrangement and heat transfer plates are known from US 5,070,939A.

### BACKGROUND ART

Plate heat exchangers, PHEs, typically consist of two end plates in between which a number of heat transfer plates are arranged in an aligned manner, i.e. in a stack. In one type of well-known PHEs, the so called gasketed PHEs, gaskets are arranged between the heat transfer plates, typically in gasket grooves which extend along edges of the heat transfer plates. The end plates, and therefore the heat transfer plates, are pressed towards each other whereby the gaskets seal between the heat transfer plates. The gaskets define parallel flow channels between the heat transfer plates through which channels two fluids of initially different temperatures alternately can flow for transferring heat from one fluid to the other. For the channels not to leak it is naturally essential that the gaskets are properly positioned between the plates.

When the plate heat exchanger is closed, the gaskets are squeezed between the plates and thereby securely held in place. However, when the gaskets are not squeezed between the plates, such as when the plate heat exchanger is assembled or open for maintenance, some kind of means for fixing the gaskets correctly to the plates is desirable. It is known to apply an adhesive in the gasket groove of a heat transfer plate to attach a gasket in the gasket groove. However, the adhesive may negatively affect the gasket and its sealing capability. The adhesive may also make it cumbersome to replace the gasket when required, since such replacement typically requires complete removal of old adhesive from the gasket groove to enable proper application of a new gasket in the gasket groove. Also, mechanical gasket fixing solutions are previously known, for example through applicant's own US Patent No. 4,635,715. This document discloses a gasket provided with securing means projecting from an outside of the gasket, which securing means are arranged to be positioned around an edge of a heat transfer plate to secure the gasket to the heat transfer plate. The securing means are capable of effectively fixing, to the heat transfer plate, portions of the gasket arranged along, and close to, an outer edge, or an internal edge for e.g., a port hole, of the heat transfer plate. However, for fixing, to the heat transfer plate, portions of the gasket not arranged to extend along and close to, the edge of the heat transfer plate, the securing means according to US Patent No. 4,635,715 are less useful.

Reference is also made to the applicants own European patent application EP4001816. It relates to a gasket arrangement having an attachment part being enclosed by an outer sealing portion and arranged on an outside of an inner sealing portion. The attachment part comprises a fastening attachment portion arranged to be fastened to the surface of a heat transfer plate by means of an adhesive means.

Having the attachment part arranged on an outside of an inner sealing portion means that the flow inside the inner sealing portion is not disturbed. However, in some cases there is a flow on the outside of the inner sealing portion, and it may be undesirable to have the attachment part projecting on the outside of the inner sealing portion.

One example of heat exchanging plates having flow on both sides of a sealing gasket is found in applicants own EP 1864069 relating to a heat exchanger for desalination of sea water. The heat exchanger comprises a plate package including an evaporation section, a separation section, and a condensation section.

Further prior art including WO2010013608 which describes a plate heat exchanger used as a freshwater generator having a cord member of heat resistant rubber having an integral plate shaped piece which is bonded to the heat exchange plate by adhesive or double-sided adhesive tape.

However, the plate shaped piece extends on both sides of the cord member. According to the present invention disclosure, the gasket attachment means only extends on one side of the gasket, namely the inwardly facing direction. This is beneficial for avoiding flow disturbance outside the gasket and improve the flow distribution in the area enclosed by the gasket.

https://andersondahlen.com/product/apv-model-r5-phe-spares, shows a gasket having minor tabs in the distribution area.

The applicants own WO2020108985 and WO2020108983 have tabs extending inwardly from the gasket, but they are not fastened by adhesive means and only provided for stability.

The document CH284574 describes a plate heat exchanger having gasket with engaging shoulders for gasket groove junction points where the gaskets have insufficient support.

The object of the present invention is therefore to provide technologies that offers a reliable fastening of the gasket arrangement to a heat transfer plate, along inner portions of the gasket arrangement, which fastening does not negatively affect the gasket or its sealing capability or make gasket replacement difficult. Other objects of the present invention are to provide a heat transfer plate arranged to cooperate with a gasket arrangement, a kit comprising a gasket arrangement and an assembly comprising a gasket arrangement and a heat transfer plate, a heat exchanger, and a method.

### SUMMARY

The above object is in a first aspect realized by a gasket arrangement as defined in claim 1.

The basic concept according to the invention is to provide the gasket arrangement with a non-sealing attachment part at a portion of the gasket arrangement arranged to extend along an inside of the annular sealing part, which attachment part is arranged to be fastened to the heat transfer plate by means of an adhesive means to secure the gasket arrangement to the heat transfer plate.

The corrugated heat transfer plate according to the invention is defined in claim 6.

The attachment part is connected to an inside of the annular sealing part and extending in an inwards direction relative to the annular sealing part meaning that the attachment part is projecting from the annular sealing part towards an interior of the circumference defined by the annular sealing part. The attachment part thus extends into the flow path defined between the set of port holes. The attachment part should thus not be projecting towards an outer edge of the heat transfer plate or towards an edge of a port hole of the heat transfer plate. The set of port holes is understood to mean at least two port holes.

The attachment part being connected to an inside of the annular sealing part at a first point and extending in an inwards direction relative to the annular sealing part, the attachment part extending less than 1/2 of the distance between the first point and a second point located on the inside of the annular sealing part opposite the first point, preferably less than 1/3, more preferably less than 1/4. The primary objective of the attachment part is to fixate the annular sealing part and not to guide the flow and therefore it must not extend very far into the area enclosed by the annular sealing part.

The gasket attachment surface is generally parallel to the above-mentioned imagined sealing plane and towards a corresponding plate attachment surface of the corrugated heat transfer plate. The adhesive can be of any suitable type, for example a glue or an adhesive agent such as e.g., silicon, or a double -sided adhesive tape. The attachment part is generally adhered to only one of the opposing heat transfer plates for remaining in place when the opposing heat transfer plates are separated from each other due to installation or maintenance.

Having the attachment part projecting on the inside of the annular sealing part means that the flow on the outside of the annular sealing part is undisturbed. The outside of the annular sealing part may thus be free from any attachment parts or outwardly projecting members. It also means that the attachment part may be positioned such that it may influence the flow on the inside of the annular sealing part. It may be advantageous in case it is desired to guide the flow on the inside of the annular sealing part in a particular direction while the flow on the outside of the annular sealing part should remain undisturbed.

According to a further embodiment of the first aspect, the annular sealing part defining a first thickness between parallel lower and upper sealing planes and the attachment part defining a second thickness between parallel lower and upper attachment planes, the parallel lower and upper attachment planes being parallel with the lower and upper sealing planes and the second thickness being different from the first thickness, preferably the second thickness being smaller than the first thickness.

The lower sealing plane is the imagined plane at which the annular sealing part is intended to seal against the annular groove of the heat transfer plate. The upper sealing plane is the extreme plane of the sealing part, but the sealing part is compressed when the plate package is assembled. The first thickness thus corresponds to the extreme extension of the annular sealing part in a direction perpendicular to the sealing plane. The lower attachment plane is the imagined plane at which the attachment part is intended to contact against the attachment surface of one of the heat transfers plates. The upper attachment plane is the imagined plane at the extreme point of the attachment part located opposite the lower attachment plane. The second thickness thus corresponds to the extreme extension of the attachment part in a direction perpendicular to the sealing plane.

The thickness of the attachment part may be different than the thickness of the annular sealing part as it must not be sealing and even if it is sealing it must not be sealing in the same plane as the annular sealing part. The attachment part may preferably have a smaller thickness than the annular sealing part as it must not be establishing a flow channel and may be as thin as structurally possible while having sufficient thickness for serving the purpose of holding the gasket arrangement in place.

According to a further embodiment of the first aspect, the lower and upper attachments planes are arranged between the lower and upper sealing planes or the lower attachment plane coincides with the lower sealing plane or the upper attachment plane coincides with the upper sealing plane or the lower sealing plane being arranged between the lower and upper attachments planes or the upper sealing plane being arranged between the lower and upper attachments planes.

Such designs may enable an optimized engagement between the attachment part and the corresponding attachment surface of the heat transfer plate. The width and/or thickness, of the attachment part is preferably different from the width and/or thickness of the annular sealing part adjacent the attachment part.

In particular, having the lower and upper attachments planes arranged between the lower and upper sealing planes allows a better support for the gasket in the gasket groove. This may allow for higher pressures. Additionally, the channel on the rear side of the plate can also be kept intact, allowing a flow close to the gasket which may counteract fouling.

According to a further embodiment of the first aspect, the annular sealing part defines a specific width between an outer edge of the annular sealing part and an inner edge of the annular sealing part, the attachment part forms a tab or a loop extending between the annular sealing part and an end point a specific distance from the annular sealing part, wherein the specific distance is less than thrice the specific width, preferably less than twice the specific width, more preferably less or equal to the specific width.

The attachment part can extend only a small distance into the flow path between the set of port holes for influencing the flow as little as possible while achieving a sufficiently large attachment surface for fixating the attachment part. The attachment part can be a loop which encloses a part of the heat transfer plate at the inside of the annular sealing part. It can alternatively be a tap which projects inwardly, preferably straight, and a small distance defined above relative to the annular sealing part.

According to a further embodiment of the first aspect, the width of the attachment part is different from the width of the specific width.

The width of the attachment part is defined as the extension of the attachment part in the attachment plane and perpendicular to the projecting direction of the attachment part. The width of the attachment part may be wider than the annular sealing part for increasing the attachment surface for fixating the attachment part while decreasing the specific distance of the attachment part. The width of the attachment part may alternatively be smaller than the annular sealing part if the attachment surface can remain sufficiently large to maintain a sufficient fixation of the gasket arrangement.

According to the invention, the annular sealing part extends along a straight line at the location of the attachment part, the attachment part extending in an oblique angle relative to the extension of the annular sealing part at the attachment part.

The attachment part can be located at a position where the annular sealing part does not bend since the purpose of the attachment part is to be adhered to one of the heat transfer plates for holding it in place and not primarily to guide or stabilize the annular sealing part. The attachment part can preferably be extending in an oblique angle for aligning with the corrugations of the heat transfer plate which typically are extending in an oblique angle for forming a cross pattern when two heat exchanging plates are position juxtaposed to each other. The attachment structure may thus be aligned with a groove or a valley of the corrugation pattern of the heat transfer plate. In this way the influence on the corrugated pattern will be reduced, thereby reducing the influence on the attachment structure on the flow.

According to a further embodiment of the first aspect, the attachment surface is flat or defining a plurality of corrugations, the attachment surface being parallel with or defining an angle relative to a plane of extension of the attachment part.

The attachment surface is preferably flat for defining a well-defined surface for the adhesive and being able to distribute the adhesive evenly over the compete attachment surface. The attachment surface may however define a plurality of small corrugations for better accommodating surplus adhesive. The attachment surface may be defining an angle relative to a plane of extension of the attachment for increasing the surface area relative to the extension of the attachment part. In this way the extension of the attachment part may be shorter while maintaining the same surface area which allows the opposing plates to contact and support each other closer to the gasket groove. A shorter attachment part may also cause less disturbance on the flow.

The above object is in a second aspect realized by a corrugated heat transfer plate comprising a set of port holes and a gasket groove, the gasket groove comprising: an annular groove being arranged to accommodate an annular sealing part of a gasket arrangement, enclosing the set of portholes of the heat transfer plate and defining a flow path between the port holes of the set of port holes, and an attachment structure connected to an inside of the annular groove and extending in an inwards direction relative to the annular groove, the attachment structure defining a plate attachment surface arranged to attach by an adhesive to a corresponding gasket attachment surface of an attachment part of the gasket arrangement.

The heat transfer plate according to the invention can be used together with the gasket arrangement according to the first aspect. The heat transfer plate comprises an annular groove being arranged to accommodate an annular sealing part and an attachment structure having a plate attachment surface arranged to attach by the adhesive to the gasket attachment surface of an attachment part. The heat transfer plate is corrugated to increase the heat transfer. The attachment structure projects from an inside of the annular groove and should thus not be projecting towards an outer edge of the heat transfer plate or towards an edge of a port hole of the heat transfer plate.

The attachment structure being connected to an inside of the annular groove at a first point and extending in an inwards direction relative to the annular groove, the attachment structure extending less than 1/2 of the distance between the first point and a second point located on the inside of the annular groove opposite the first point, preferably less than 1/3, more preferably less than ¼. The primary objective of the attachment structure is to fixate the annular sealing part and not to guide the flow and therefore it must not extend very far into the area enclosed by the annular sealing part.

The heat transfer plate according to the second aspect may include any of the features of the gasket arrangement according to the first aspect.

According to a further embodiment of the second aspect, the heat transfer plate may comprise an outer annular gasket groove enclosing the annular gasket groove, the outer gasket groove preferably being located adjacent an outer edge of the corrugated heat transfer plate.

The attachment structure is preferably located on the inside of an inner gasket groove which is enclosed by an outer annular gasket groove and allowing flow outside the inner annular gasket groove and inside the outer annular gasket groove which is then not disturbed by the attachment structure.

According to a further embodiment of the second aspect the plate attachment surface coincides with the annular gasket groove or the plate attachment surface defining a smaller press depth than the annular gasket groove or the plate attachment surface defining a larger press depth than the annular gasket groove.

This is so that the attachment part preferably can define a different thickness than the annular sealing part.

A heat exchanger according to the invention comprises a plate package comprising a gasket arrangement as defined in claim 1 located between a pair of opposing corrugated heat transfer as defined in claim 6.

The attachment structure extending less than 1/2 of the distance between the first point at which the attachment structure connected to an inside of the annular groove and a second point located on the inside of the annular groove opposite the first point, preferably less than 1/3, more preferably less than 1/4. The attachment part extending along the attachment structure.

The attachment part can contact both heat transfer plates. This may be beneficial in case a guiding of the flow is desired. However, the attachment part may alternatively define a gap to the upper plate and allow a flow between the attachment and the upper plate.

According to the invention, the attachment surface of the attachment structure coincides with a valley of one of the heat transfer plates. In this way there is no need for a separate attachment surface as the valley can act both as a contact point and support surface for the opposing plates as well as an attachment surface for the attachment structure.

The above object is realized by a method of assembling a plate package for a plate heat exchanger by providing:
a gasket arrangement according to the first aspect, a pair of heat transfer plates according to the second aspect, and an adhesive,
the method comprising the step of:
   applying the adhesive on the plate attachment surface and/or on the gasket attachment surface, and
   arranging the gasket arrangement between the pair of opposing corrugated heat transfer plates, thereby forming the plate package.

The above method can be used for producing or refurbishing a heat exchanger according to the invention.

### BRIEF DESCRIPTION OF THE DRAWINGS

FIG 1A is a front view of a heat transfer plate for freshwater production.
FIG 1B is a front view of the plate of FIG 1A having a gasket.
FIG 2A is a front view of a part of the plate of FIG 1B.
FIG 2B is a perspective view of a part of the plate of FIG 1A.
FIG 2C is a perspective view of a part of the plate and gasket of FIG 1B.
FIG 3A is a side view of a plate and gasket arrangement.
FIG 3B is a side view of an alternative plate and gasket arrangement.
FIG 3C is a side view of a further alternative plate and gasket arrangement.
FIG 3D is a side view of a yet further alternative plate and gasket arrangement.
FIG 3E is a side view of a plate and gasket arrangement similar to FIG 3A.
FIG 3F is a side view of a further arrangement similar to FIG 3A.
FIG 3G is side view of a yet further arrangement similar to FIG 3A.
FIG 3H is a side view of a plate and gasket arrangement similar to FIG 3G.
FIG 4A is a front view of a heat transfer plate for a heat exchanger.
FIG 4B is a front view of the plate of FIG 4A having a gasket.
FIG 5A is a perspective view of a part of the plate of FIG 4A.
FIG 5B is a perspective view of a part of the gasket arrangement of FIG 4B.
FIG 5C is perspective view of a part of the plate and gasket of FIG 4B.
FIG 6A is a front view of an alternative heat transfer plate for a heat exchanger.
FIG 6B is a front view of the alternative plate of FIG 6A having a gasket.
FIG 7A is a perspective view of a part of the alternative plate of FIG 6A.
FIG 7B is a perspective view of a part of the gasket arrangement of FIG 6B.
FIG 7C is perspective view of a part of the alternativ plate and gasket of FIG 6B.

### DETAILED DESCRIPTION OF THE DRAWINGS

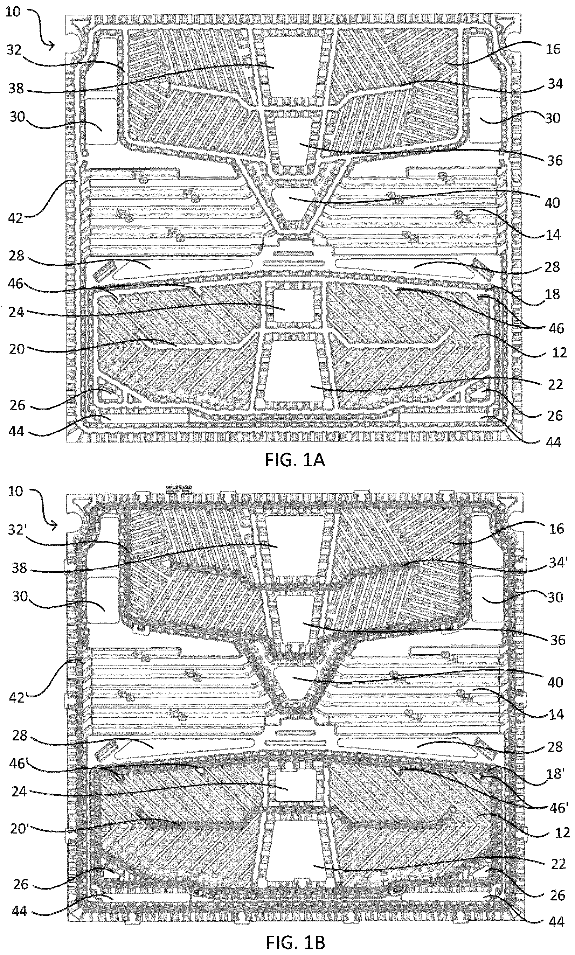

FIG 1A is a front view of a heat transfer plate 10 for freshwater production. The heat transfer plate 10 is made of metal such as stainless steel, or more preferably titanium, and comprises an evaporation section 12, a separation section 14, and a condensation section 16.

The evaporation section 12 is corrugated to form a cross corrugated pattern together with an opposing plate which is turned 180 degrees and enclosed by a first inner annular groove 18. The evaporation section 12 comprises a first guide groove 20, a heating fluid outlet 22 and a heating fluid inlet 24 for circulating a heating fluid. The evaporation section 12 further comprises two opposite feed inlets 26 for introducing sea water on the opposite side of the heat transfer plate 10 to be evaporated by the heating fluid.

The separation section 14 is corrugated such that corrugations of opposing plates fall into each other for removing any droplets from the evaporated sea water. The separation section 14 includes two opposite passages 28 for transporting evaporated feed into the separation section 14 and two pairs of opposite passages 30 for transporting evaporated feed from the separation section 14 into the condensation section 16.

The condensation section 16 is corrugated to form a cross corrugated pattern together with an opposing plate which is turned 180 degrees and enclosed by a second inner annular groove 32. The condensation section 16 comprises a second guide groove 34, a cooling fluid inlet 36 and a cooling fluid outlet 38 for circulating a cooling fluid. The condensation section 16 further comprises a freshwater outlet 40 for discharging fresh water which is condensed on the opposite side of the heat transfer plate 10.

The heat transfer plate 10 has two opposite brine outlets 44 at the bottom of the plate for removing any unevaporated part of the feed. The heat transfer plate 10 is enclosed by an outer annular gasket groove 42. The heat transfer plate 10 further comprises attachment structures 46 which will be discussed in detail further below. The attachment structures 46 extend from respective attachment points on the inner side of the first inner annular groove 18 towards opposite points on the first inner annular groove 18 on the opposite side, however, only a small distance (less than 1/2 the distance to the opposite points on the first inner annular groove 18) when compared to the first guide groove 20 (which extends more that 1/2 the distance to the opposite point on the first inner annular groove 18).

FIG 1B is a front view of the heat transfer plate 10 of FIG 1A having a gasket arrangement made up of annular sealing parts 18' 32' 42', guiding parts 20' 34' and attachment parts 46'. The gasket arrangement is made of a flexible material such as rubber. A first inner annular sealing part 18' is located in the first inner annular gasket grove. A first guiding part 20' is located in the first guide groove. A second inner annular sealing part 32' is located in the second inner annular groove. A second guiding part 34' is located in the second guide groove. An outer annular sealing part 42' is located in an outer annular gasket groove 42. Attachment parts 46' are located in and along the attachment structures. The attachment parts 46' extend from respective attachment points on the inner side of the first inner annular sealing part 18' towards opposite points on the first inner annular sealing part 18' on the opposite side, however, only a small distance (less than 1/2 the distance to the opposite points on the first inner annular groove 18) when compared to the first guiding part 20' (which extends more than 1/2 the distance to the opposite point on the first annular sealing part 18')

The unevaporated part of the feed which is separated by the separation section 14 falls onto the outer side of the first inner annular sealing part 18' and is guided between the first inner annular sealing part 18' and the outer annular sealing part 42' to the brine outlets 44.

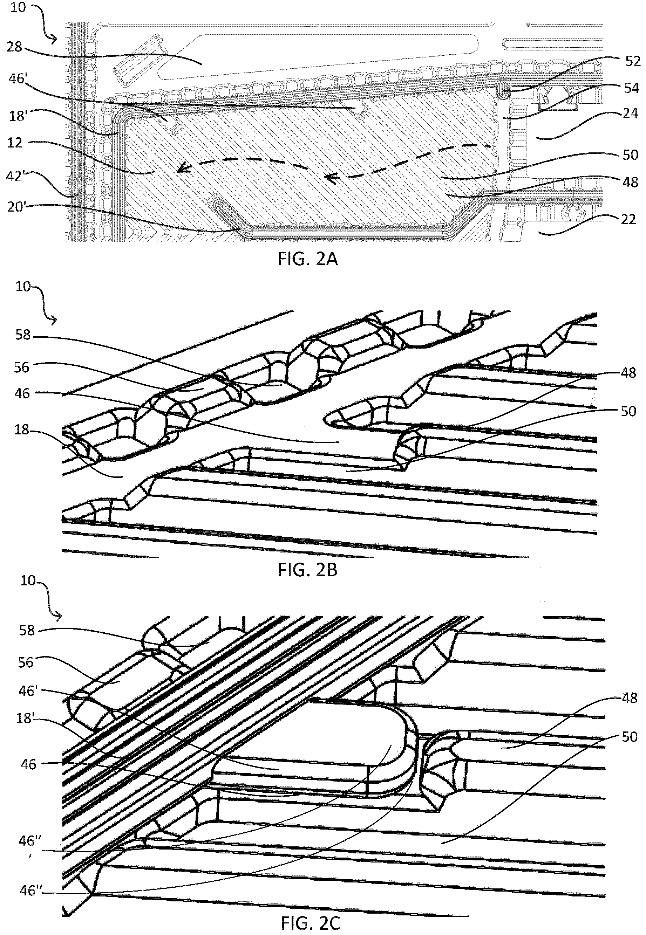

FIG 2A is a front view of a part of the evaporation section 12 of the heat transfer plate 10 of FIG 1B. The two attachment parts 46' visible here are projecting from the inner side of the first inner annular sealing part 18' into the evaporation section 12 and the flow path (illustrated by the dashed arrow) defined between the heating water inlet 24 and the heating water outlet 22. The attachment parts 46' have an attachment surface (not visible) which is fastened to the underlying attachment structure (covered by the attachment part) of the heat transfer plate 10 by means of adhesive such as liquid adhesive, solid adhesive or adhesive double-sided tape. The attachment parts 46' hold the first inner annular sealing part 18' in place when the plate package is open for assembly or repair at which time the opposing heat transfer plates do not fixate the first inner annular sealing part and may optionally be used for directing the flow in a specific direction (as illustrated by the dashed arrow) so that the flow covers the complete evaporation section 12. However, having the attachment part directed in the same direction as the adjacent ridges and valleys may reduce the influence on the corrugated pattern and thereby eliminate any effect of the attachment part on the flow. The outer side of the inner annular sealing part 18' is free from any attachment parts for being free from obstructions which may hinder the flow of the unevaporated part of the feed on the outer side of the first inner annular sealing part 18'.

The evaporation section 12 is corrugated and defines a corrugation pattern of alternating ridges 48 and valleys 50. The attachment structure (covered by the attachment part 46') is preferably coinciding with an existing ridge 48 or valley 50 of the corrugation pattern of the heat exchanging plate 10. This typically means that the attachment part 46' defines an oblique angle relative to the annular sealing part 18' at the location of the attachment part 46'. The attachment surface (covered by the attachment part 46') of the heat transfer plate 10 typically define a different press depth than the coinciding ridge 48 or valley 50.

The first inner annular sealing part 18' includes an optional short stabilizing part 52 extending a short distance into a port gasket groove 54. The port gasket groove 54 is used by a port sealing on the opposite side of the heat transfer plate 10 to encircle the heating fluid inlet 24 and a heating fluid outlet 22. The short stabilizing part 52 is located at a bend of the first inner annular sealing part 18' and is not fixated by any adhesive means but merely used for stabilizing and guiding purposes at the junction between the first inner annular groove located at a bend of the first inner annular sealing part 18'.

FIG 2B is a perspective view of a part of the evaporation section 12 of the heat transfer plate 10 of FIG 1A, without the gasket arrangement. The heat transfer plate 10 comprises alternating gasket guiding elevations 56 and gasket guiding depressions 58 on the outer side of the first inner annular groove 18 and alternating ridges 48 and valleys 50 on the inner side of the first inner annular groove 18 for holding the first inner annular sealing part in place. The attachment structure 46 defines an attachment surface for attaching by adhesive means to the corresponding attachment part (not shown) of the gasket arrangement. The attachment structure 46 is here aligned with the ridges 48 for not disturbing the corrugation pattern of the evaporation section 12

FIG 2C is a perspective view of a part of the heat transfer plate 10 and gasket of FIG 1B. The attachment part 46' projects inwardly from the annular sealing part 18 and defines a flat contact surface (not visible) being adhered to a corresponding flat contact surface 46" of the attachment structure 46 of the heat transfer plate 10 for keeping the annular sealing part 18 in place when the plate package is open. The attachment part 46' extends in an oblique angle aligned with the ridge 48 from a straight part of the annular sealing part 18'. The attachment part 46' defines a flat upper surface 46‴ which preferably contacts an opposing contact surface (not shown) of an opposing heat transfer plate.

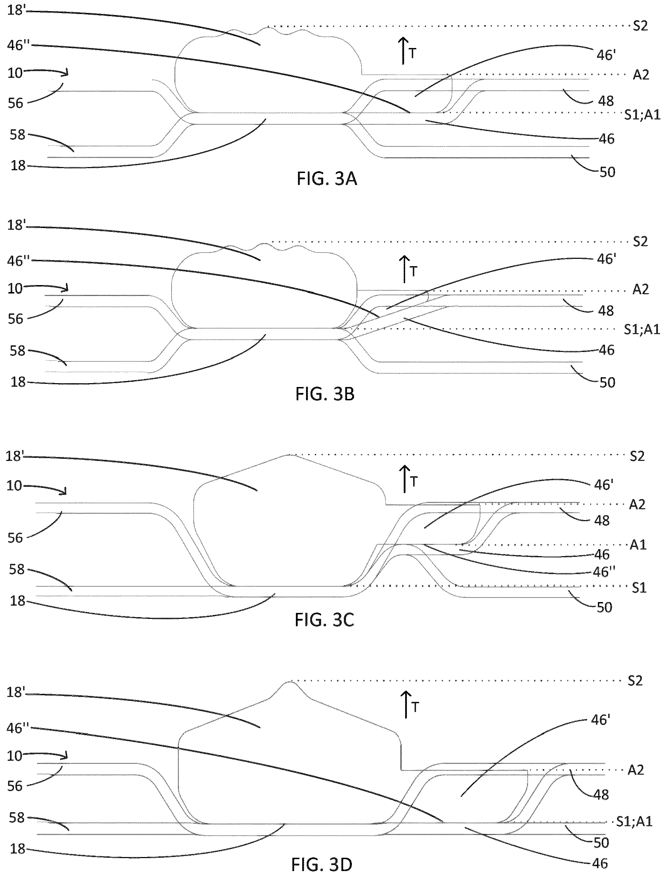

FIG 3A is a side view of a heat transfer plate 10 (where a ridge 48, a valley 50, a protrusion 56 and depression 58 are shown overlaying each other) and gasket arrangement comprising an annular sealing part 18' and an attachment part 46'. The thickness direction of the gasket arrangement is shown by the arrow T. The attachment part 46 defining an attachment surface being adhered to a corresponding attachment surface 46" of the attachment structure 46 of the heat transfer plate 10. The annular sealing part 18' positioned in the annular gasket groove 18 and defines a lower sealing plane S1 at the annular gasket groove 18 and an upper sealing plane S2 at an imaginary position of an opposing heat transfer plate. In the present embodiment the attachment part 46' defines a lower attachment plane A1 at the attachment surface 46" which is coinciding with the lower sealing plane S1 and an upper attachment plane A2 located between a ridge 48 and an upper sealing plane S2.

FIG 3B is a side view of an alternative heat transfer plate 10 and gasket arrangement. In the present embodiment the attachment part 46' defines a sloping attachment surface between an attachment plane A1 which is coinciding with the lower sealing plane S1 and an upper attachment plane A2 located between a ridge 48 and an upper sealing plane S2.

FIG 3C is a side view of a further alternative heat transfer plate 10 and gasket arrangement. In the present embodiment the attachment part 46' defines a lower attachment plane A1 at the attachment surface 46" which is not coinciding with the lower sealing plane S1 but located between the lower sealing plane S1 and an upper attachment plane A2 which is located between a ridge 48 and an upper sealing plane S2.

FIG 3D is a side view of a yet further alternative heat transfer plate 10 and gasket arrangement. In the present embodiment the attachment part 46' defines a lower attachment plane A1 at the attachment surface 46" which is coinciding with the lower sealing plane S1 and a valley 50 and an upper attachment plane A2 located between a ridge 48 and an upper sealing plane S2.

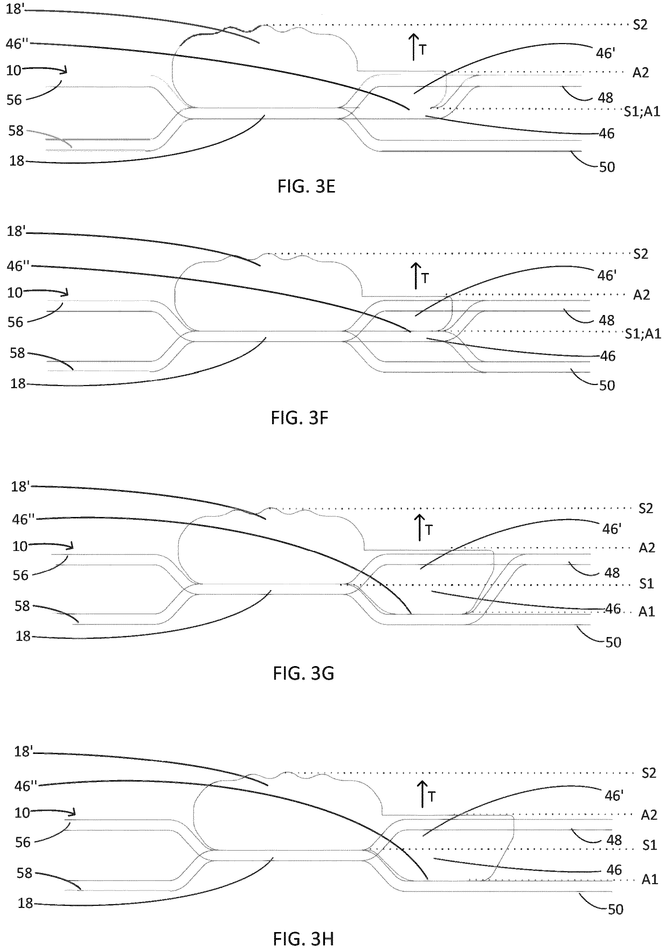

FIG 3E is a side view of a plate and gasket arrangement similar to FIG 3A except that the attachment surface 46" defines a plurality of small corrugations for being able to accommodate any possible excessive adhesive better.

FIG 3F is a side view of a further arrangement similar to FIG 3A, except that both a ridge 48 and a valley 50 has been modified to define the attachment surface 46" of the attachment structure 46. This may be used when it is desired to make the attachment surface 46" and the corresponding attachment part 46' wider than the width of a single ridge 48 or valley 50.

FIG 3G is side view of a yet further arrangement similar to FIG 3A, except that the lower attachment plane A1 is located below the lower sealing plane S1.

FIG 3H is a side view of a plate and gasket arrangement similar to FIG 3G, except that the attachment surface 46" of the attachment structure 46 coincides with a valley 50 instead of a ridge 48.

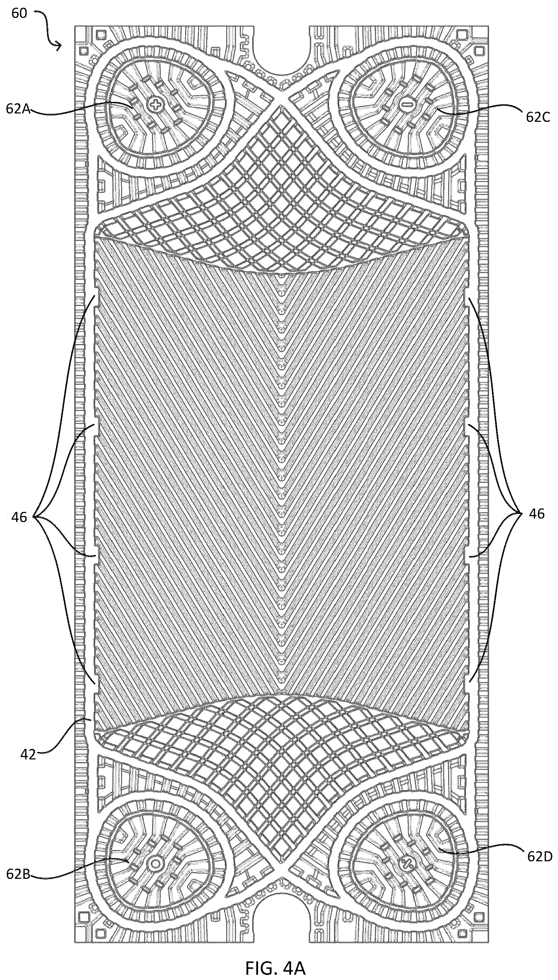

FIG 4A is a front view of a corrugated heat transfer plate 60 for a heat exchanger. The heat transfer plate 60 comprises four port holes 62A-D (not cut out in the figure). The heat transfer plate 60 further comprises an annular groove 42 which encloses the heat transfer plate 60 and defines flow passages between portholes 62A and 62B, and, between portholes 62C and 62D, respectively. The heat transfer plate 60 further comprises a plurality of attachment structures 46 connected to an inside of the annular groove 42. The attachment structures 46 extend from respective attachment points on the inner side of the annular groove 42 towards opposite points having attachment structures 46 on the annular groove 42 on the opposite side, however, only a small distance (less than 1/2 the distance to the opposite points on the annular groove 42).

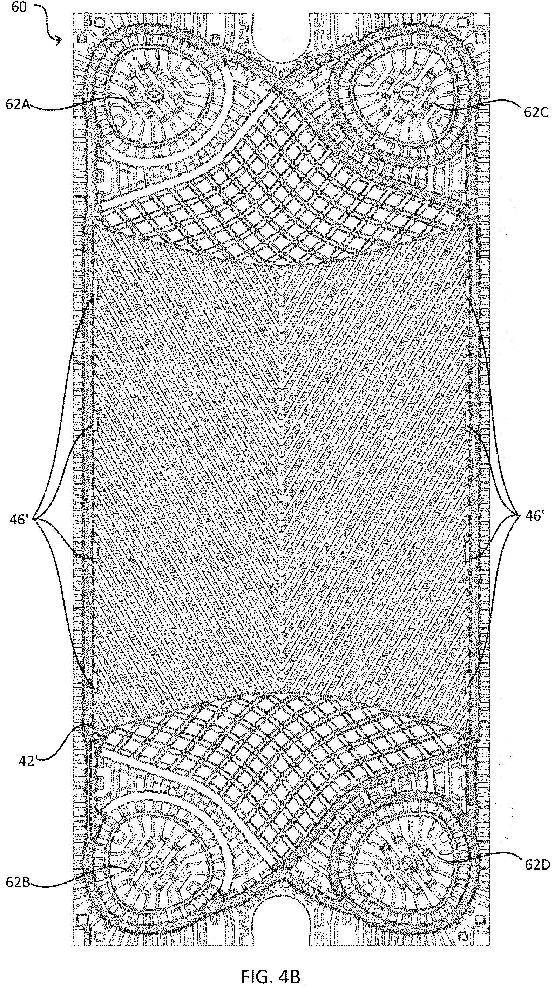

FIG 4B is a front view of the plate of FIG 4A having a gasket arrangement. The gasket arrangement comprising an annular sealing part 42' located in the annular groove of the heat transfer plate 60 and defining a flow passage between portholes 62A and 62B but prevents fluid communication with any of the two other port holes 62C and 62D. As a side note, another annular sealing part (not shown) on the opposite side of the heat transfer plate 60 defines a flow passage between portholes 62C and 62D but prevents fluid communication with any of the two other port holes 62A and 62B. In the heat exchanger several heat transfer plates 60 are stacked whereby every second heat transfer plate is turned 180 degrees, having an annular sealing parts 42' between themselves, whereby every second annular sealing part 42' is configured to form a flow channel between portholes 62A and 62B but preventing fluid communication with any of the two other port holes 62C and 62D and every other annular sealing parts 42' is configured to form a flow channel between portholes 62C and 62D but preventing fluid communication with any of the two other port holes 62A and 62B.

The gasket arrangement further comprising a plurality attachment parts 46' each located at a respective attachment structures 46 and being connected to an inside of the annular sealing part 42'. The attachment parts 46' are located close to an outer edge of heat transfer plate 60 but extending inwardly relative to the annular sealing part 42'. The attachment parts 46' are located spaced apart from the port holes 62A-D. The attachment parts 46' extend from respective attachment points on the inner side of the first inner annular sealing part 42' towards opposite points having attachment parts 46' on the first inner annular sealing part 42' on the opposite side, however, only a small distance (less than 1/2 the distance to the opposite points on the first inner annular sealing part 42').

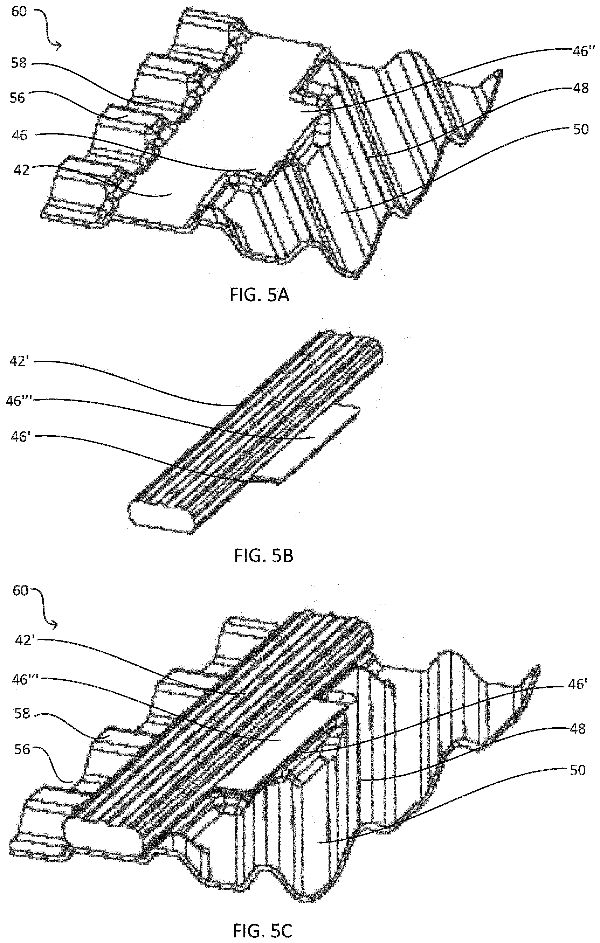

FIG 5A is a perspective view of a part of the heat transfer plate 60 of FIG 4A. The annular groove 42 of the heat transfer plate 60 is located between alternating elevations 56 and depressions 58 on one side adjacent the edge of the heat transfer plate 60 and ridges 48 and valleys 50 located on the opposite side of the annular groove 42 inside the heat transfer area of the heat transfer plate 60. The attachment part 46 projects inwardly into the heat transfer area and into the flow path. The attachment part 46 defines an attachment surface 46" intended to be adhered to a corresponding surface of an attachment part of an annular gasket part. In this way clips and other similar means can be avoided close to the edge of the heat transfer plate 60.

FIG 5B is a perspective view of a part of the gasket arrangement of FIG 4B. The gasket arrangement comprises the annular sealing part 42' and the attachment part 46'.

FIG 5C is perspective view of a part of the heat transfer plate 60 and gasket arrangement of FIG 4B. The attachment part 46' of the gasket arrangement and the corresponding attachment structure 46 of the heat transfer plate 60 define a with being greater than the width of the annular sealing part 42' and the corresponding annular groove 42. The width of the attachment part 46' and the corresponding attachment structure 46 is also greater than the width of a single ridge 48 or a single valley. In this way the attachment part must not extend far into the flow path while still allowing a sufficient attachment surface for the adhesive.

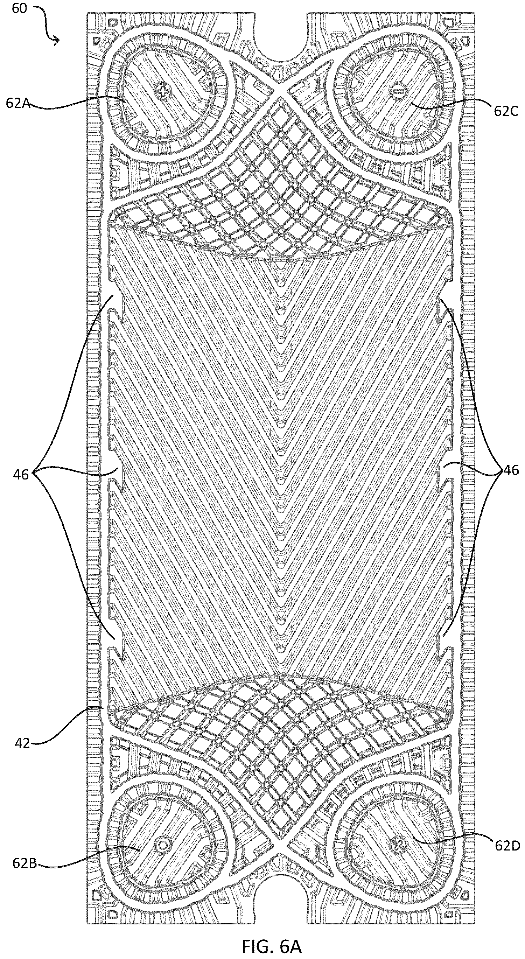

FIG 6A is a front view of a corrugated heat transfer plate 60 for a heat exchanger. The present heat transfer plate 60 is identical to the heat transfer plate of FIG 4A, except that the plurality of attachment structures 46 extend in an oblique angle relative to the extension of the annular groove 42 at the attachment part 46.

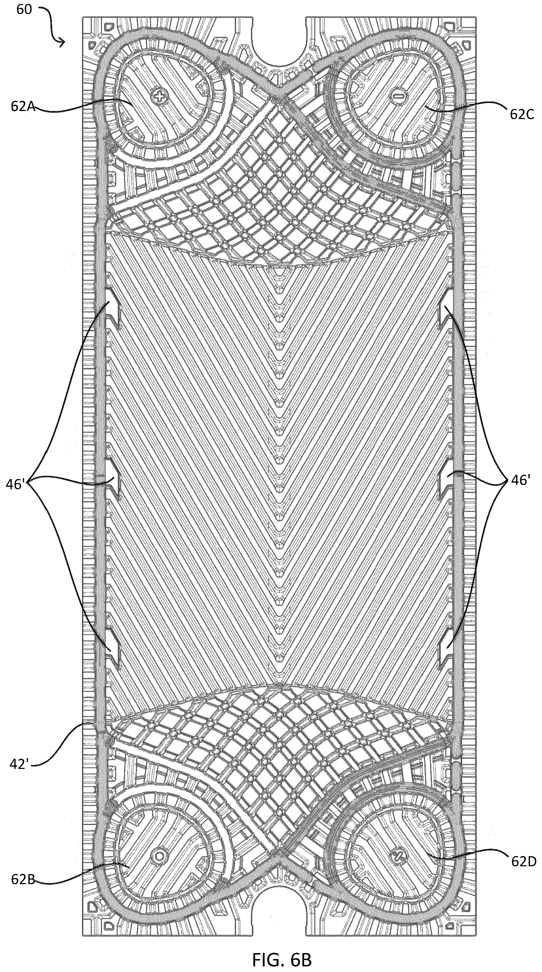

FIG 6B is a front view of the heat transfer plate of FIG 6A having a gasket arrangement. The gasket arrangement is identical to the gasket arrangement of heat transfer plate of FIG 4B, except that the attachment parts 46' extend in an oblique angle relative to the extension of the sealing part 42' at the attachment part 46'.

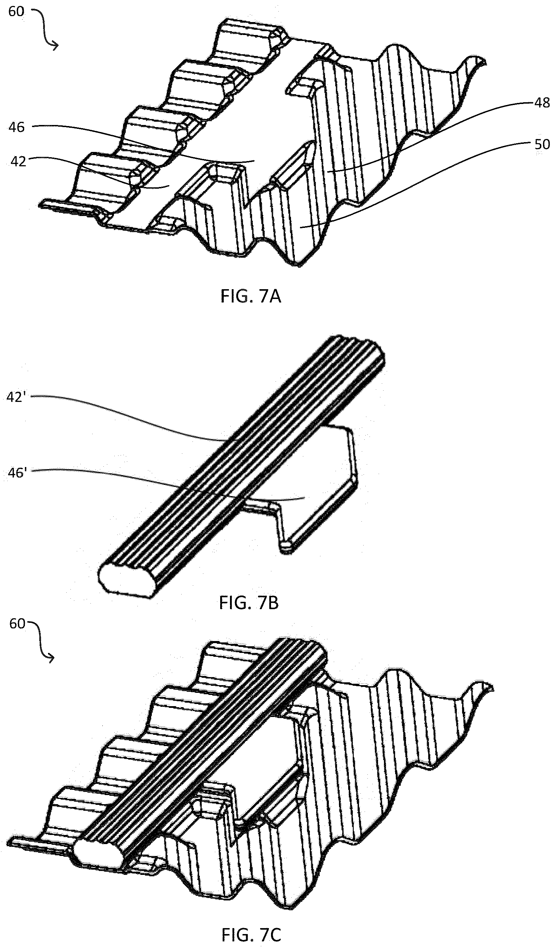

FIG 7A is a perspective view of a part of the heat transfer plate 60 of FIG 4A. The attachment structure 46 extends from the annular groove 42 in the same direction as the adjacent obliquely extending ridges 48 and valleys 50 of the heat transfer plate 60. In this way the influence on the corrugated pattern will be reduced compared to having an attachment structure extending at a right angle relative to the extension of the annular groove.

FIG 7B is a perspective view of a part of the gasket arrangement of FIG 6B. The attachment part 46' extends from the sealing part 42' in the same direction as the adjacent ridges 48 and valleys 50 of the heat transfer plate 60 to conform with the attachment structure of FIG 7A.

FIG 7C is perspective view of a part of the heat transfer plate 60 and gasket arrangement of FIG 6B.

The number of attachment parts, structures, bridges, bridge receiving portions, etc., in the above-described embodiments are just exemplary and can be varied.

The present invention could be used in connection with other types of heat transfer plates than the above described one. Such other plate types could be made of other materials than stainless steel and titanium, be provided with a gasket groove of an alternative design, be provided with another pattern or another port hole design. A corresponding reasoning is valid for the gasket arrangement.

The present invention could be used in connection with other types of plate heat exchangers than purely gasketed ones, e.g., plate heat exchangers comprising cassettes of permanently joined heat transfer plates. It should be stressed that the attributes first and second is used herein just to distinguish between species of the same kind and not to express any kind of mutual order between the species.

It should be stressed that a description of details not relevant to the present invention has been omitted and that the figures are just schematic and not drawn according to scale. It should also be said that some of the figures have been more simplified than others. Therefore, some components may be illustrated in one figure but left out on another figure.

## Claims

1. A gasket arrangement for sealing between two corrugated heat transfer plates (10) of a plate heat exchanger, the heat transfer plates (10) each comprising a set of port holes (62A 62B 62C 62D), the gasket arrangement comprising:
an annular sealing part (18' 32' 42') being arranged to enclose the set of portholes (62A 62B 62C 62D) of the heat transfer plates (10) and define a flow path between the port holes of the set of port holes (62A 62B 62C 62D), and
an attachment part (46') connected to an inside of the annular sealing part (18' 32' 42') at a first point and extending in an inwards direction relative to the annular sealing part (18' 32' 42'), the attachment part (46') extending less than 1/2 of the distance between the first point and a second point located on the inside of the annular sealing part (18' 32' 42') opposite the first point, the attachment part (46') defining a gasket attachment surface (46‴) arranged to attach by an adhesive to a corresponding plate attachment surface (46") of one of the heat transfer plates (10) **characterized in that** the annular sealing part (18' 32' 42') extends along a straight line at the location of the attachment part (46'), the attachment part (46') extends in an oblique angle relative to the extension of the annular sealing part (18' 32' 42') at the attachment part (46').

2. The gasket arrangement according to claim 1, wherein the attachment part (46') extending less than 1/3, preferably less than 1/4, of the distance between the first point and a second point located on the inside of the annular sealing part (18' 32' 42') opposite the first point.

3. The gasket arrangement according to any of the preceding claims, wherein the annular sealing part (18' 32' 42') defining a first thickness between parallel lower and upper sealing planes (S1 S2) and the attachment part (46') defining a second thickness between parallel lower and upper attachment planes (A1 A2), the parallel lower and upper attachment planes (A1 A2) being parallel with the lower and upper sealing planes (S1 S2) and the second thickness being different from the first thickness, preferably the second thickness being smaller than the first thickness, and/or, the lower and upper attachments planes (A1 A2) are arranged between the lower and upper sealing planes (S1 S2) or the lower attachment plane (A1) coincides with the lower sealing plane (S1) or the upper attachment plane (A2) coincides with the upper sealing plane (S2) or the lower sealing plane (S1) being arranged between the lower and upper attachments planes (A1 A2) or the upper sealing plane (S2) being arranged between the lower and upper attachments planes (A1 A2).

4. The gasket arrangement according to any of the preceding claims, wherein the annular sealing part (18' 32' 42') defines a specific width between an outer edge of the annular sealing part (18' 32' 42') and an inner edge of the annular sealing part (18' 32' 42'), the attachment part (46') forms a tab or a loop extending between the annular sealing part (18' 32' 42') and an end point a specific distance from the annular sealing part (18' 32' 42'), wherein the specific distance is less than thrice the specific width, preferably the width of the attachment part (46') is different from the width of the specific width and preferably the specific distance is less than twice the specific width, more preferably the specific distance is less or equal to the specific width.

5. The gasket arrangement according to any of the preceding claims, wherein the attachment surface (46‴) is flat or defining a plurality of corrugations, the attachment surface (46‴) being parallel or defining an angle with a plane of extension of the attachment part (46')

6. A corrugated heat transfer plate (10) comprising a set of port holes and a gasket groove (18), the gasket groove (18) comprising:
an annular groove (18) being arranged to accommodate an annular sealing part (18' 32' 42') of a gasket arrangement, enclosing the set of portholes of the heat transfer plate (10), and defining a flow path between the port holes of the set of port holes, and
an attachment structure (46) connected to an inside of the annular groove (18) at a first point and extending in an inwards direction relative to the annular groove (18), the attachment structure (46) extending less than 1/2 of the distance between the first point and a second point located on the inside of the annular groove (18) opposite the first point, the attachment structure (46) defining a plate attachment surface (46") arranged to attach by an adhesive to a corresponding gasket attachment surface (46‴) of an attachment part (46') of the gasket arrangement, **characterized in that** the annular groove (18) extends along a straight line at the location of the attachment structure (46), wherein the attachment structure (46) extending in an oblique angle relative to the extension of the annular groove (18) at the attachment structure (46) and wherein the attachment structure (46) being parallel with a corrugation pattern within the annular grove adjacent the attachment structure (46).

7. The corrugated heat transfer plate (10) according to claim 6, wherein the attachment structure (46) extending less than 1/3, preferably less than 1/4, of the distance between the first point and a second point located on the inside of the annular groove (18) opposite the first point

8. The corrugated heat transfer plate (10) according to any of the claims 6-7, wherein the annular groove (18) defines a specific width between an outer edge of the annular groove (18) and an inner edge of the annular groove (18), the attachment structure (46) forms a projection or a loop extending between the annular groove (18) and an end point a specific distance from the annular groove (18), wherein the specific distance is less than thrice the specific width, preferably the width of the attachment structure (46) is different from the width of the specific width and preferably the specific distance is less than twice the specific width, more preferably the specific distance is less or equal to the specific width.

9. The corrugated heat transfer plate (10) according to any of the claims 6-8, wherein the plate attachment surface (46") is flat or defining a plurality of corrugations, the attachment surface (46") being parallel with the parallel lower and upper sealing plane, or, wherein the plate attachment surface (46") is flat or defining a plurality of corrugations, the attachment surface (46") defining an angle relative to the parallel lower and upper sealing plane.

10. The corrugated heat transfer plate (10) according to any of the claims 6-9, further comprising an outer annular gasket groove (42) enclosing the annular gasket groove (18), preferably the outer annular gasket groove (42) being located adjacent an outer edge of the corrugated heat transfer plate (10).

11. The corrugated heat transfer plate (10) according to any of the claims 6-10, wherein the plate attachment surface (46") coincides with the annular gasket groove (18) or the plate attachment surface (46") defining a smaller press depth than the annular gasket groove (18) or the plate attachment surface (46") defining a larger press depth than the annular gasket groove (18).

12. A heat exchanger comprising a plate package comprising a gasket arrangement according to claim 1 located between a pair of opposing corrugated heat transfer plates (10) according to claim 6, wherein the attachment surface (46") of the attachment structure (46) coincides with a valley of one of the heat transfer plates (10).

13. The heat exchanger according to claim 12, wherein the attachment structure (46) extending less than 1/3, preferably 1/4, of the distance between the first point and a second point located on the inside of the annular groove (18) opposite the first point.

14. A method of assembling a plate package for a plate heat exchanger by providing:
a gasket arrangement according to any of claims 1-5,
a pair of heat transfer plates (10) according to any of claims 6-11, and
an adhesive,
the method comprising the step of:
applying the adhesive on the plate attachment surface (46") and/or on the gasket attachment surface (46"), and
arranging the gasket arrangement between the pair of opposing corrugated heat transfer plates (10), thereby forming the plate package.

## Patentansprüche

1. Dichtungsanordnung zum Abdichten zwischen zwei gewellten Wärmeübertragungsplatten (10) eines Plattenwärmetauschers, wobei die Wärmeübertragungsplatten (10) jeweils einen Satz von Anschlusslöchern (62A 62B 62C 62D) umfassen, wobei die Dichtungsanordnung Folgendes umfasst:
einen ringförmigen Abdichtungsteil (18' 32' 42'), der angeordnet ist, um den Satz von Anschlusslöchern (62A 62B 62C 62D) der Wärmeübertragungsplatten (10) zu umschließen und eine Strömungsbahn zwischen den Anschlusslöchern des Satzes von Anschlusslöchern (62A 62B 62C 62D) zu definieren, und
einen Befestigungsteil (46'), der mit einer Innenseite des ringförmigen Abdichtungsteils (18' 32' 42') an einem ersten Punkt verbunden ist und sich in einer Richtung nach innen im Verhältnis zu dem ringförmigen Abdichtungsteil (18' 32' 42') erstreckt, wobei sich der Befestigungsteil (46') über weniger als 1/2 der Entfernung zwischen dem ersten Punkt und einem zweiten Punkt, der sich auf der Innenseite des ringförmigen Abdichtungsteils (18' 32' 42') entgegengesetzt zu dem ersten Punkt befindet, erstreckt, wobei der Befestigungsteil (46') eine Dichtungsbefestigungsfläche (46‴) definiert, die angeordnet ist, um sich durch einen Klebstoff an einer entsprechenden Plattenbefestigungsfläche (46") einer der Wärmeübertragungsplatten (10) zu befestigen, **dadurch gekennzeichnet, dass** sich der ringförmige Abdichtungsteil (18' 32' 42') entlang einer geraden Linie an der Position des Befestigungsteils (46') erstreckt, sich der Befestigungsteil (46') in einem schrägen Winkel im Verhältnis zu der Erstreckung des ringförmigen Abdichtungsteils (18' 32' 42') an dem Befestigungsteil (46') erstreckt.

2. Dichtungsanordnung nach Anspruch 1, wobei sich der Befestigungsteil (46') über weniger als 1/3, vorzugsweise weniger als 1/4, der Entfernung zwischen dem ersten Punkt und einem zweiten Punkt, der sich auf der Innenseite des ringförmigen Abdichtungsteils (18' 32' 42') entgegengesetzt zu dem ersten Punkt befindet, erstreckt.

3. Dichtungsanordnung nach einem der vorhergehenden Ansprüche, wobei der ringförmige Abdichtungsteil (18' 32' 42') eine erste Dicke zwischen einer unteren und einer parallelen oberen Abdichtungsebene (S1 S2) definiert und der Befestigungsteil (46') eine zweite Dicke zwischen einer unteren und einer parallelen oberen Befestigungsebene (A1 A2) definiert, wobei die untere und die parallele obere Befestigungsebene (A1 A2) parallel zu der unteren und der parallelen oberen Abdichtungsebene (S1 S2) sind und sich die zweite Dicke von der ersten Dicke unterscheidet, wobei vorzugsweise die zweite Dicke kleiner ist als die erste Dicke, und/oder, die untere und die obere Befestigungsebene (A1 A2) zwischen der unteren und der oberen Abdichtungsebene (S1 S2) angeordnet sind oder die untere Befestigungsebene (A1) mit der unteren Abdichtungsebene (S1) übereinstimmt oder die obere Befestigungsebene (A2) mit der oberen Abdichtungsebene (S2) übereinstimmt oder wobei die untere Abdichtungsebene (S1) zwischen der unteren und der oberen Befestigungsebene (A1 A2) angeordnet ist oder wobei die obere Abdichtungsebene (S2) zwischen der unteren und der oberen Befestigungsebene (A1 A2) angeordnet ist.

4. Dichtungsanordnung nach einem der vorhergehenden Ansprüche, wobei der ringförmige Abdichtungsteil (18' 32' 42') eine spezifische Breite zwischen einer äußeren Kante des ringförmigen Abdichtungsteils (18' 32' 42') und einer inneren Kante des ringförmigen Abdichtungsteils (18' 32' 42') definiert, der Befestigungsteil (46') eine Lasche oder eine Schlinge bildet, die sich zwischen dem ringförmigen Abdichtungsteil (18' 32' 42') und einem Endpunkt in einer spezifischen Entfernung von dem ringförmigen Abdichtungsteil (18' 32' 42') erstreckt, wobei die spezifische Entfernung geringer ist als das Dreifache der spezifischen Breite, vorzugsweise sich die Breite des Befestigungsteils (46') von der Breite der spezifischen Breite unterscheidet und vorzugsweise die spezifische Entfernung geringer ist als das Doppelte der spezifischen Breite, bevorzugter die spezifische Entfernung geringer als oder gleich groß wie die spezifische Breite ist.

5. Dichtungsanordnung nach einem der vorhergehenden Ansprüche, wobei die Befestigungsfläche (46‴) eben ist oder eine Vielzahl von Wellungen definiert, wobei die Befestigungsfläche (46‴) parallel zu einer Erstreckungsebene des Befestigungsteils (46') ist oder einen Winkel mit derselben definiert.

6. Gewellte Wärmeübertragungsplatte (10) die einen Satz von Anschlusslöchern und eine Dichtungsnut (18) umfasst, wobei die Dichtungsnut (18) Folgendes umfasst:
eine ringförmige Nut (18), die angeordnet ist, um einen ringförmigen Abdichtungsteil (18' 32' 42') einer Dichtungsanordnung aufzunehmen, der den Satz von Anschlusslöchern der Wärmeübertragungsplatte (10) umschließt und eine Strömungsbahn zwischen den Anschlusslöchern des Satzes von Anschlusslöchern definiert, und
eine Befestigungsstruktur (46), die mit einer Innenseite der ringförmigen Nut (18) an einem ersten Punkt verbunden ist und sich in einer Richtung nach innen im Verhältnis zu der ringförmigen Nut (18) erstreckt, wobei sich die Befestigungsstruktur (46) über weniger als 1/2 der Entfernung zwischen dem ersten Punkt und einem zweiten Punkt, der sich auf der Innenseite der ringförmigen Nut (18) entgegengesetzt zu dem ersten Punkt befindet, erstreckt, wobei die Befestigungsstruktur (46) eine Plattenbefestigungsfläche (46") definiert, die angeordnet ist, um sich durch einen Klebstoff an einer entsprechenden Dichtungsbefestigungsfläche (46‴) eines Befestigungsteils (46') der Dichtungsanordnung zu befestigen, **dadurch gekennzeichnet, dass** sich die ringförmige Nut (18) entlang einer geraden Linie an der Position der Befestigungsstruktur (46) erstreckt, wobei sich die Befestigungsstruktur (46) in einem schrägen Winkel im Verhältnis zu der Erstreckung der ringförmigen Nut (18) an der Befestigungsstruktur (46) erstreckt und wobei die Befestigungsstruktur (46) parallel zu einem Wellungsmuster innerhalb der ringförmigen Nut angrenzend an die Befestigungsstruktur (46) ist.

7. Gewellte Wärmeübertragungsplatte (10) nach Anspruch 6, wobei sich die Befestigungsstruktur (46) über weniger als 1/3, vorzugsweise weniger als 1/4, der Entfernung zwischen dem ersten Punkt und einem zweiten Punkt, der sich auf der Innenseite der ringförmigen Nut (18) entgegengesetzt zu dem ersten Punkt befindet, erstreckt.

8. Gewellte Wärmeübertragungsplatte (10) nach einem der Ansprüche 6 bis 7, wobei die ringförmige Nut (18) eine spezifische Breite zwischen einer äußeren Kante des ringförmigen Nut (18) und einer inneren Kante der ringförmigen Nut (18) definiert, die Befestigungsstruktur (46) einen Vorsprung oder eine Schlinge bildet, der/die sich zwischen der ringförmigen Nut (18) und einem Endpunkt in einer spezifischen Entfernung von der ringförmigen Nut (18) erstreckt, wobei die spezifische Entfernung geringer ist als das Dreifache der spezifischen Breite, vorzugsweise sich die Breite der Befestigungsstruktur (46) von der Breite der spezifischen Breite unterscheidet und vorzugsweise die spezifische Entfernung geringer ist als das Doppelte der spezifischen Breite, bevorzugter die spezifische Entfernung geringer als oder gleich groß wie die spezifische Breite ist.

9. Gewellte Wärmeübertragungsplatte (10) nach einem der Ansprüche 6 bis 8, wobei die Plattenbefestigungsfläche (46") eben ist oder eine Vielzahl von Wellungen definiert, wobei die Befestigungsfläche (46") parallel zu der unteren und der parallelen oberen Abdichtungsebene ist, oder, wobei die Plattenbefestigungsfläche (46") eben ist oder eine Vielzahl von Wellungen definiert, wobei die Befestigungsfläche (46") einem Winkel im Verhältnis zu der unteren und der parallelen oberen Abdichtungsebene definiert.

10. Gewellte Wärmeübertragungsplatte (10) nach einem der Ansprüche 6 bis 9, die ferner eine äußere ringförmige Dichtungsnut (42) umfasst, welche die ringförmige Dichtungsnut (18) umschließt, vorzugsweise, wobei sich die äußere ringförmige Dichtungsnut (42) angrenzend an eine äußere Kante der gewellten Wärmeübertragungsplatte (10) befindet.

11. Gewellte Wärmeübertragungsplatte (10) nach einem der Ansprüche 6 bis 10, wobei die Plattenbefestigungsfläche (46") mit der ringförmigen Dichtungsnut (18) übereinstimmt oder die Plattenbefestigungsfläche (46") eine kleinere Presstiefe definiert als die ringförmige Dichtungsnut (18) oder die Plattenbefestigungsfläche (46'') eine größere Presstiefe definiert als die ringförmige Dichtungsnut (18).

12. Wärmetauscher, der ein Plattenpaket umfasst, das eine Dichtungsanordnung nach Anspruch 1 umfasst, die sich zwischen einem Paar von gegenüberliegenden gewellten Wärmeübertragungsplatten (10) nach Anspruch 6 befindet, wobei die Befestigungsfläche (46") der Befestigungsstruktur (46) mit einem Tal einer der Wärmeübertragungsplatten (10) übereinstimmt.

13. Wärmetauscher nach Anspruch 12, wobei sich die Befestigungsstruktur (46) über weniger als 1/3, vorzugsweise 1/4, der Entfernung zwischen dem ersten Punkt und einem zweiten Punkt, der sich auf der Innenseite der ringförmigen Nut (18) entgegengesetzt zu dem ersten Punkt befindet, erstreckt.

14. Verfahren zum Zusammenbauen eines Plattenpakets für einen Plattenwärmetauscher durch Bereitstellen:
einer Dichtungsanordnung nach einem der Ansprüche 1 bis 5,
eines Paares von Wärmeübertragungsplatten (10) nach einem der Ansprüche 6 bis 11, und
eines Klebstoffs,
wobei das Verfahren den folgenden Schritt umfasst:
Aufbringen des Klebstoffs auf die Plattenbefestigungsfläche (46") und/oder auf die Dichtungsbefestigungsfläche (46"), und
Anordnen der Dichtungsanordnung zwischen dem Paar von gegenüberliegenden gewellten Wärmeübertragungsplatten (10), wodurch das Plattenpaket gebildet wird.

## Revendications

1. Agencement de joint pour le scellement entre deux plaques de transfert de chaleur ondulées (10) d'un échangeur de chaleur à plaques, les plaques de transfert de chaleur (10) comprenant chacune un ensemble de lumières (62A 62B 62C 62D), l'agencement de joint comprenant :
une partie de scellement annulaire (18' 32' 42') disposée pour entourer l'ensemble de lumières (62A 62B 62C 62D) des plaques de transfert de chaleur (10) et définir une voie de passage entre les lumières de l'ensemble de lumières (62A 62B 62C 62D), et
une partie de fixation (46') reliée à un intérieur de la partie de scellement annulaire (18' 32' 42') au niveau d'un premier point et s'étendant dans une direction vers l'intérieur par rapport à la partie de scellement annulaire (18' 32' 42'), la partie de fixation (46') s'étendant sur moins de 1/2 de la distance entre le premier point et un deuxième point situé à l'intérieur de la partie de scellement annulaire (18' 32' 42'), à l'opposé du premier point, la partie de fixation (46') définissant une surface de fixation de joint (46"') disposée pour se fixer *via* un adhésif à une surface de fixation de plaque correspondante (46") de l'une des plaques de transfert de chaleur (10), **caractérisé en ce que** la partie de scellement annulaire (18' 32' 42') s'étend le long d'une ligne droite à l'emplacement de la partie de fixation (46'), la partie de fixation (46') s'étend selon un angle oblique par rapport à l'extension de la partie de scellement annulaire (18' 32' 42') au niveau de la partie de fixation (46').

2. Agencement de joint selon la revendication 1, dans lequel la partie de fixation (46') s'étendant sur moins de 1/3, de préférence moins de 1/4, de la distance entre le premier point et un deuxième point situé à l'intérieur de la partie de scellement annulaire (18' 32' 42'), à l'opposé du premier point.

3. Agencement de joint selon l'une quelconque des revendications précédentes, dans lequel la partie de scellement annulaire (18' 32' 42') définit une première épaisseur entre des plans de scellement inférieur et supérieur parallèles (S1 S2) et la partie de fixation (46') définit une deuxième épaisseur entre des plans de fixation inférieur et supérieur parallèles (A1 A2), les plans de fixation inférieur et supérieur parallèles (A1 A2) étant parallèles aux plans de scellement inférieur et supérieur (S1 S2) et la deuxième épaisseur étant différente de la première épaisseur, de préférence la deuxième épaisseur étant inférieure à la première épaisseur, et/ou les plans de fixation inférieur et supérieur (A1 A2) sont disposés entre les plans de scellement inférieur et supérieur (S1 S2) ou le plan de fixation inférieur (A1) coïncide avec le plan de scellement inférieur (S1) ou le plan de fixation supérieur (A2) coïncide avec le plan de scellement supérieur (S2) ou le plan de scellement inférieur (S1) étant disposé entre les plans de fixation inférieur et supérieur (A1 A2) ou le plan de scellement supérieur (S2) étant disposé entre les plans de fixation inférieur et supérieur (A1 A2).

4. Agencement de joint selon l'une quelconque des revendications précédentes, dans lequel la partie de scellement annulaire (18' 32' 42') définit une largeur spécifique entre un bord extérieur de la partie de scellement annulaire (18' 32' 42') et un bord intérieur de la partie de scellement annulaire (18' 32' 42'), la partie de fixation (46') forme une languette ou une boucle s'étendant entre la partie de scellement annulaire (18' 32' 42') et un point d'extrémité une distance spécifique de la partie de scellement annulaire (18' 32' 42'), dans lequel la distance spécifique est inférieure à trois fois la largeur spécifique, de préférence la largeur de la partie de fixation (46') est différente de la largeur de la largeur spécifique et de préférence la distance spécifique est inférieure à deux fois la largeur spécifique, de façon particulièrement préférée la distance spécifique est inférieure ou égale à la largeur spécifique.

5. Agencement de joint selon l'une quelconque des revendications précédentes, dans lequel la surface de fixation (46''') est plate ou définit une pluralité d'ondulations, la surface de fixation (46''') étant parallèle ou définissant un angle avec un plan d'extension de la partie de fixation (46').

6. Plaque de transfert de chaleur ondulée (10) comprenant un ensemble de lumières et une gorge de joint (18), la gorge de joint (18) comprenant :
une gorge annulaire (18) disposée pour accueillir une partie de scellement annulaire (18' 32' 42') d'un agencement de joint, entourant l'ensemble de lumières de la plaque de transfert de chaleur (10), et définissant une voie de passage entre les lumières de l'ensemble de lumières, et
une structure de fixation (46) reliée à un intérieur de la gorge annulaire (18) au niveau d'un premier point et s'étendant dans une direction vers l'intérieur par rapport à la gorge annulaire (18), la structure de fixation (46) s'étendant sur moins de 1/2 de la distance entre le premier point et un deuxième point situé à l'intérieur de la gorge annulaire (18) à l'opposé du premier point, la structure de fixation (46) définissant une surface de fixation de plaque (46") disposée pour se fixer *via* un adhésif à une surface de fixation de joint (46‴) correspondante d'une partie de fixation (46') de l'agencement de joint, **caractérisé en ce que** la gorge annulaire (18) s'étend le long d'une ligne droite à l'emplacement de la structure de fixation (46), dans lequel la structure de fixation (46) s'étend selon un angle oblique par rapport à l'extension de la gorge annulaire (18) au niveau de la structure de fixation (46) et dans lequel la structure de fixation (46) est parallèle à un motif d' ondulation à l'intérieur de la gorge annulaire adjacente à la structure de fixation (46).

7. Plaque de transfert de chaleur ondulée (10) selon la revendication 6, dans laquelle la structure de fixation (46) s'étend sur moins de 1/3, de préférence moins de 1/4, de la distance entre le premier point et un deuxième point situé à l'intérieur de la gorge annulaire (18), à l'opposé du premier point.

8. Plaque de transfert de chaleur ondulée (10) selon l'une quelconque des revendications 6 à 7, dans laquelle la gorge annulaire (18) définit une largeur spécifique entre un bord extérieur de la gorge annulaire (18) et un bord intérieur de la gorge annulaire (18), la structure de fixation (46) forme une projection ou une boucle s'étendant entre la gorge annulaire (18) et un point d'extrémité à une distance spécifique de la gorge annulaire (18), dans laquelle la distance spécifique est inférieure à trois fois la largeur spécifique, de préférence la largeur de la structure de fixation (46) est différente de la largeur de la largeur spécifique et de préférence la distance spécifique est inférieure à deux fois la largeur spécifique, de façon particulièrement préférée la distance spécifique est inférieure ou égale à la largeur spécifique.

9. Plaque de transfert de chaleur ondulée (10) selon l'une quelconque des revendications 6 à 8, dans laquelle la surface de fixation de plaque (46") est plate ou définit une pluralité d'ondulations, la surface de fixation (46") étant parallèle au plan de scellement inférieur et supérieur parallèle, ou, dans laquelle la surface de fixation de plaque (46") est plate ou définit une pluralité d'ondulations, la surface de fixation (46") définissant un angle par rapport au plan de scellement inférieur et supérieur parallèle.

10. Plaque de transfert de chaleur ondulée (10) selon l'une quelconque des revendications 6 à 9, comprenant en outre une gorge de joint annulaire extérieure (42) entourant la gorge de joint annulaire (18), de préférence la gorge de joint annulaire extérieure (42) étant située de façon adjacente à un bord extérieur de la plaque de transfert de chaleur ondulée (10).

11. Plaque de transfert de chaleur ondulée (10) selon l'une quelconque des revendications 6 à 10, dans laquelle la surface de fixation de plaque (46") coïncide avec la gorge de joint annulaire (18) ou la surface de fixation de plaque (46") définissant une profondeur de pression inférieure à la gorge de joint annulaire (18) ou la surface de fixation de plaque (46") définissant une profondeur de pression supérieure à la gorge de joint annulaire (18).

12. Échangeur de chaleur comprenant un lot de plaques comprenant un agencement de joint selon la revendication 1 situé entre une paire de plaques de transfert de chaleur ondulées (10) opposées selon la revendication 6, dans lequel la surface de fixation (46") de la structure de fixation (46) coïncide avec un creux de l'une des plaques de transfert de chaleur (10).

13. Échangeur de chaleur selon la revendication 12, dans lequel la structure de fixation (46) s'étendant sur moins de 1/3, de préférence 1/4, de la distance entre le premier point et un deuxième point situé à l'intérieur de la gorge annulaire (18), à l'opposé du premier point.

14. Procédé d'assemblage d'un lot de plaques pour un échangeur de chaleur à plaques en fournissant :
un agencement de joint selon l'une quelconque des revendications 1 à 5,
une paire de plaques de transfert de chaleur (10) selon l'une quelconque des revendications 6 à 11, et
un adhésif,
le procédé comprenant l'étape suivante :
l'application de l'adhésif sur la surface de fixation de plaque (46") et/ou sur la surface de fixation de joint (46''), et
l'agencement de l'agencement de joint entre la paire de plaques de transfert de chaleur ondulées (10) opposées, formant ainsi le lot de plaques.
